# EUROPEAN PATENT APPLICATION

(11) **EP 3 521 149 A1**
(43) Date of publication of application: **07.08.2019**
(21) Application number: 19155841.0
(22) Date of filing: 06.02.2019
(51) Int. Cl.: B62J 6/00, B62J 6/04

(54) **BICYLCLE LAMP ASSEMBLY**

(30) Priority: 06.02.2018 GB 201801939
(71) Applicant: Blade Bikelights Limited, Enfield, Greater London EN1 3DU (GB)
(72) Inventor: Whiffin, Sean, Enfield, Greater London EN1 3DU (GB); Little, Mark, Brchington, Kent CT7 9RE (GB)
(74) Representative: Harrison IP Limited

(57) **Abstract**

A rear lamp assembly for a bicycle is disclosed which comprises a bracket for clamping onto a frame member of the bicycle and an arm carrying at least one lamp and coupled to the bracket to project laterally from the plane of the bicycle. The coupling between the laterally projecting arm and the bracket permits relative movement between the arm and the bracket and includes at least one spring to retain the arm in at least one predetermined relative position of the arm and the bracket. The arm is coupled to the bracket by a ball and socket joint and at least one spring biased detent is provided between the ball and the socket to retain the arm and the bracket in a predetermined relative position in which the arm projects laterally from the bicycle.

## Description

### Field of the invention

The present invention relates to a lamp assembly for mounting on the rear of a bicycle.

### Background of the invention

To enable cyclist to be seen when riding in dark conditions, it is common to mount lamps on the front and the rear of the bicycle. To comply with traffic regulations, the front light is white, and may also serve to illuminate the road ahead for the cyclist, while the rear light is red. The light emitted by the lamps may be continuous or it may flash intermittently, other drivers being more likely to take notice of a flashing light.

Conventionally, the rear lamp is positioned centrally on the bicycle, being placed either directly beneath the saddle or on the fork of the bicycle frame secured to the rear wheel. In the dark, this gives overtaking vehicles no indication of the width of the obstruction presented by the cyclist and can result in traffic driving too close to the cyclist. It is therefore desirable for the rear lamp to be mounted offset to one side; to the right when cars drive on the left-hand side of the road and to the left in countries where cars drive on the right of the road.

Rear bicycle lamp assemblies that project laterally are known in the art. US2013/014837, for example, shows a rear lamp assembly in the form of two strip lights that project laterally both left and right from beneath the bicycle saddle.

Cyclists often get on to a bicycle by first scootering, that is to say the cyclist will place one foot on a pedal while the other leg is used to push along the ground. After sufficient speed has been reached, the cyclist would swing his second leg over the rear wheel and take up a position on the saddle.

A problem presented by a laterally projecting rear lamp assembly is that it tends to get knocked by the cyclist if mounting the bicycle in this manner.

### Summary of the invention

With a view to mitigating the above disadvantage, the present invention provides a rear lamp assembly for a bicycle comprising a bracket for clamping onto a frame member of the bicycle and an arm carrying at least one lamp and coupled to the bracket to project laterally from the plane of the bicycle, wherein the coupling between the laterally projecting arm and the bracket permits relative movement between the arm and the bracket and includes at least one spring to retain the arm in at least one predetermined relative position of the arm and the bracket, and wherein the arm is coupled to the bracket by a ball and socket joint and at least one spring biased detent is provided between the ball and the socket to retain the arm and the bracket in a predetermined relative position in which the arm projects laterally from the bicycle.

The term "the plane of the bicycle" is used herein to refer to the vertical plane of symmetry of the bicycle, that is to say the plane containing the rims of the front and rear wheels and normal to the axis or rotation of the rear wheel.

The advantage of a ball and socket joint is that it will permit rotation of the arm relative to the bracket about all axes, thereby preventing damage to the laterally projecting arm regardless of the direction in which it is deflected.

Embodiments of the invention allow the arm carrying the light emitting element(s) to be deflected, be it accidentally or intentionally, yet ensures that the arm will return to, or stay when returned to, its desired position, projecting laterally from the bicycle.

It is desirable to provide a first resiliently biased detent to hold the ball in a manner that allows the arm to rotate about a horizontal axis lying in the plane of the bicycle and a second resiliently biased detent lying in a plane transverse to the latter horizontal axis to hold the ball in a predetermined orientation relative to the plane of the bicycle in which the arm projects laterally to a first side of the bicycle.

In addition to the second detent, a third resiliently biased detent may be provided in the transverse plane to hold the ball in a predetermined orientation relative to the plane of the bicycle in which the arm projects laterally to a second side of the bicycle. In this way, the same lamp assembly can be used in countries where vehicles drive on both the left and the right side of the road.

If desired, a further detent may be provided in the transverse plane to retain the arm in the plane of the bicycle.

In practice, the lamps carried by the arm will include at least one red light facing the rear of the bicycle. As the laterally projecting arm can also be seen from the front of the bicycle, the lamps may also include a white light facing forward.

If desired, the lamps may include a flashing yellow light to serve as a direction indicator.

### Brief description of the drawings

The invention will now be described further, by way of example, with reference to the accompanying drawings, in which:
Figure 1 is a perspective view of a lamp assembly of the invention in its assembled state,
Figure 2 is a partly sectioned view of the lamp assembly of Figure 1 with the section plane passing through the axis of symmetry of a coupling between the laterally extending arm and the mounting bracket,
Figure 3 is a shaded exploded view of the lamp assembly in Figures 1 and 2, and
Figure 4 is a section view of an alternative design the coupling between the laterally extending arm and the mounting bracket.

### Detailed description of the drawings

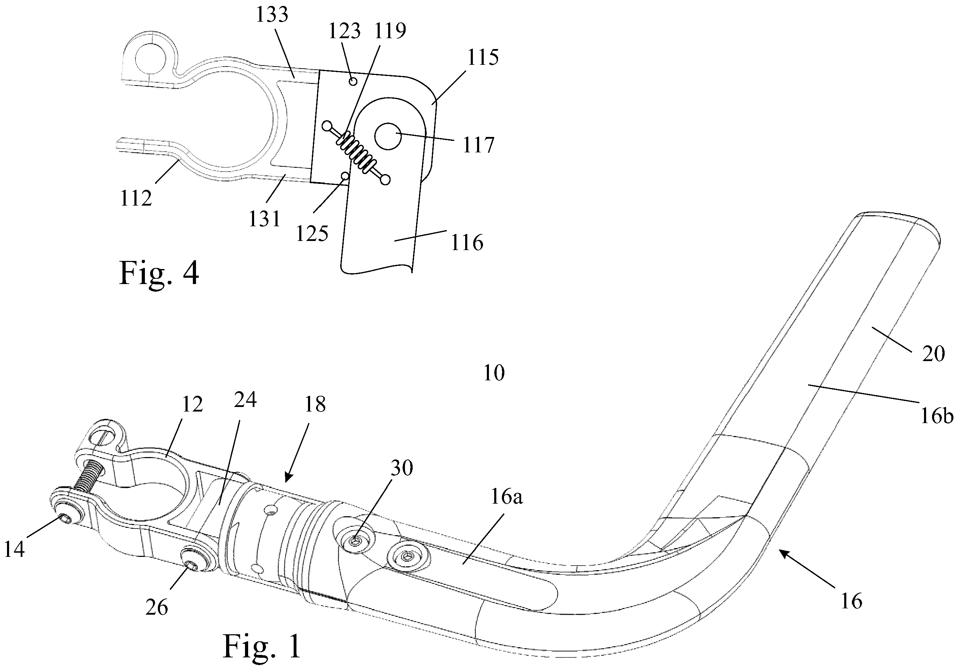

Referring to Figures 1 to 3, a rear lamp assembly 10 for a bicycle (not shown) comprises a mounting bracket 12 having the form of a clamp that fits over the saddle post, this being the tube that carries the saddle and that is telescopically received in the bicycle frame to allow the height of the saddle to be adjusted. A nut and bolt 14 serve to tighten the mounting bracket 12 about the saddle post and thus rigidly secure the lamp assembly to the bicycle frame.

An L-shaped arm 16 is connected by a coupling 18 to the mounting bracket 12. One limb 16a of the arm 16 lies in the plane of the bicycle frame in line with the coupling 18 and the mounting bracket 12, while another limb 16 projects laterally from the bicycle plane and carries one or more lamps 20.

One can define three axes of rotation by reference to the plane of the bicycle. The roll axis lies in the plane the bicycle and is horizontal. The pitch axis is also horizontal but is at right angles to the roll axis, i.e. parallel to the axis of rotation of the rear wheel and the yaw axis is a vertical axis in the plane of the bicycle orthogonal to the roll and pitch axes.

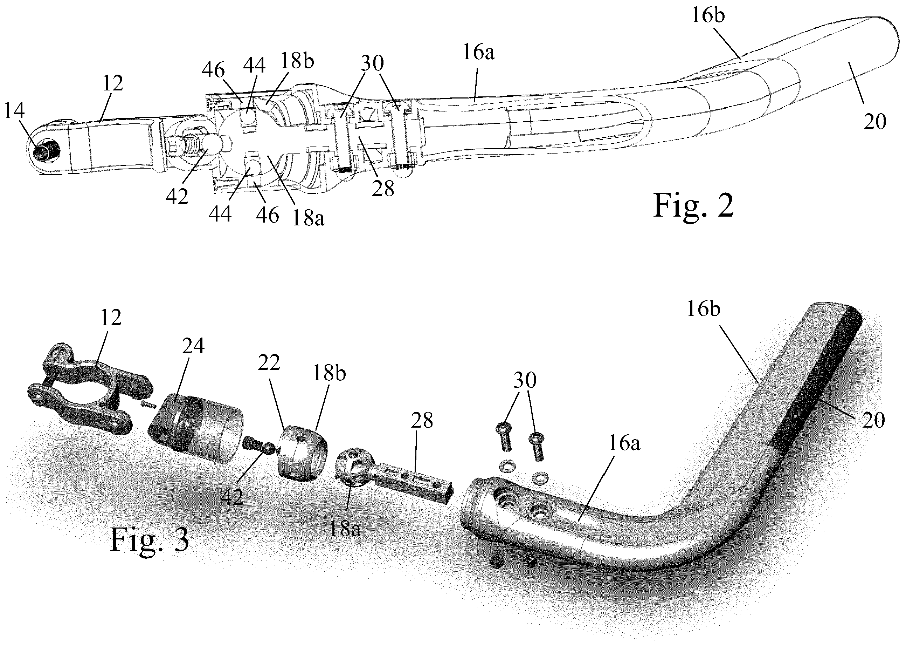

In the embodiment of Figure 1 to 3, the coupling 18 between the arm 16 and the mounting bracket 12 is a ball 18a and socket 18b joint, best seen in the exploded view of Figure 3, that allows movement about all three axes. In other words, the limb 16a can be rotated up and down in a vertical plane about the pitch axis, moved from side to side in a horizontal plane about the yaw axis and rotated about the roll axis to swing the limb 16s of the arm 16 from one side of the bicycle to the other, passing through a central position in which the limb 16b lies vertically in the plane of the bicycle.

The socket 18b of the joint 18 is secured by a dovetail joint 22 to a coupling tube 24 that is itself clamped to the bracket 12 by nuts and bolts 26. This forms a pivotal connection between the socket 18b and the bracket 12 to ensure that the central axis of the coupling can be set in a horizontal attitude, even if the saddle post slopes.

The ball 18a of the joint 18 is mounted on the end of a square section shaft 28 that is received within the end of the limb 16a of the arm 16 and is secured to the arm 16 by two nuts and screws 30.

The ball and socket joint 18 includes five spring biased detents and depressions to hold the arm 16 steady only when it is in certain positions. The detents are shown as small ball bearings, but they may alternatively be formed by cylindrical pins with spherical ends.

The first of the spring biased detents 42 (see Figures 2 and 3) is mounted in the coupling tube 24 and can be received in a depression in the ball 18a directly in line with the shaft 28. This serves to ensure that resistance is met when the limb 16a is moved up and down and sideways. i.e. away from the horizontal or away from the plane of the bicycle.

With the spring biased detent 42 received in its depression in the ball 18, the arm 16 can still be moved by rotation about the roll axis. The other four spring biased detents 44, also shown as formed by ball bearings, are mounted in the ball 18a and engage in holes 46 or depressions in the socket 18b. The four detents 44, and the holes 46, are arranged at intervals of 90°, so that the arm 16 can be held in four angular positions. In three of the positions, the limbs 16b arm 16 would project (i) to one side of the bicycle, (ii) vertically upwards, and (iii) to the opposite side of the bicycle. The fourth position is one in which the limb 16b would be held in a position pointing vertically downwards from the saddle, but the arm 16 cannot be pivoted to this extent as it would collide with the rear wheel.

The lamps 20 may comprise a red light facing rearwards as well as a white light facing forwards. If desired, the lamps may include a flashing yellow direction indicator, operated by a switch mounted on the handle bar of the bicycle.

In the embodiment of Figures 1 to 3, if the limb 16a of the arm 16 is moved away from horizontal position relative to the coupling tube 24, there is no restoring force tending to return it to the horizontal position. Therefore, if the arm is dislodged from its desired position, it will not automatically realign itself.

An alternative embodiment of the coupling is shown in Figure 4. To avoid unnecessary repetition, in the description of the alternative embodiment, like parts have been given the same last two digits, the difference being that the numerals of alternative embodiment are in the 100 series.

In the embodiment of Figure 4, the ball 118a features a radial bore 117 to receive the detent 142 and a flat surface 119 in an area surrounding the radial bore 117, the flattened surface 119 of the ball around the central bore 117 serving to return the arm 116 to its original position if knocked or moved slightly.

To reduce wear of the ball around the edge of the depression, the flat surface may be formed by the axial end of a sleeve inserted into the depression. The sleeve may have a hardness similar to, or higher than, that of the detent.

The person skilled in the art will appreciate that various modifications may be made to the assembly without departing from the scope of the invention as set forth in the appended claims. For example, the elements on which the detents 42,44,142,144 are mounted and the elements in which the mating depressions are formed may be interchanged. Hence, the balls 44 may be mounted in the socket 118b in the same way as the ball 42, in which case a mating depression would be formed in the ball 18a. Furthermore, while the provision of a flat around a central bore to provide a restoring force to the arm 16 has been illustrated only for the detent 142, it may equally be applied to the detents 44,144.

## Claims

1. A rear lamp assembly (10) for a bicycle comprising a bracket (12) for clamping onto a frame member of the bicycle and an arm (16) carrying at least one lamp (20) and coupled to the bracket (12) to project laterally from the plane of the bicycle, wherein the coupling between the laterally projecting arm (16) and the bracket (12) permits relative movement between the arm (16) and the bracket (12) and includes at least one spring to retain the arm (16) in at least one predetermined relative position of the arm (16) and the bracket (12), and wherein the arm (16) is coupled to the bracket (12) by a ball and socket joint (18) and at least one spring biased detent (42,44,46) is provided between the ball (18a) and the socket (18b) to retain the arm (16) and the bracket (12) in a predetermined relative position in which the arm (16) projects laterally from the bicycle.

2. A rear lamp assembly as claimed in claim 1, wherein a first detent (42) is provided to hold the ball (18a) in a manner that allows the arm (16) to rotate about a horizontal axis lying in the plane of the bicycle and a second detent (44) cooperates with a depression (46) lying in a plane transverse to the latter horizontal axis to hold the ball (18a) in a predetermined orientation relative to the plane of the bicycle in which the arm (16) projects laterally to a first side of the bicycle.

3. A rear lamp assembly as claimed in Claim 2, wherein a detent (44) cooperates with a further depression lying in the transverse plane to hold the ball (18a) in a predetermined orientation relative to the plane of the bicycle in which the arm (16) projects laterally to a second side of the bicycle.

4. A rear lamp assembly as claimed in Claim 2 or 3, wherein a still further depression (46) is provided in the transverse plane to retain the arm (16) in the plane of the bicycle.

5. A rear lamp assembly as claimed in any preceding claim, wherein the laterally projecting arm (16) carries a first lamp (20) emitting red light and facing the rear of the bicycle and a second lamp emitting white light and facing the front of the bicycle.

6. A rear lamp assembly as claimed in any preceding claim, wherein the laterally projecting arm (16) carries additionally a lamp emitting yellow light to serve as a direction indicator.

7. A rear lamp assembly as claimed in any preceding claim, wherein a detent (142) is mounted in the socket (18b) to cooperate with a depression (117) formed in the surface of the ball (118a).

8. A rear lamp assembly as claimed in claim 7, wherein the depression (142) formed in the ball (118a) comprises a radial bore (117) to receive the detent (142) and a flat region (119) surrounding the bore (117).

9. A rear lamp assembly as claimed in claim 8, wherein the flat surface (119) is formed by an axial end surface of a sleeve fitted within the radial bore (117).
